# EUROPEAN PATENT SPECIFICATION

(11) **EP 1 788 022 B1**
(45) Date of publication and mention of the grant of the patent: **31.12.2008**
(21) Application number: 05025068.7
(22) Date of filing: 16.11.2005
(51) Int. Cl.: C08L 23/10, C08L 23/16

(54) **Polypropylene resin with low shrinkage, high impact strength, stiffness and scratch resistance**
Polypropylenharzzusammensetzung mit geringer Schrumpfung, hoher Schlagfestigkeit, Steifheit und Kratzfestigkeit
Composition de résine de polypropylène ayant une faible rétraction, une haute résistance au choc, rigidité et une haute résistance aux rayures

(43) Date of publication of application: 23.05.2007
(73) Proprietor: Borealis Technology Oy, 06101 Porvoo (FI)
(72) Inventor: Machl, Doris, 4020 Linz (AT); Bernreitner, Klaus, 4010 Linz (AT); Grein, Christelle, 4020 Linz (AT)
(74) Representative: Kador & Partner

(56) References cited:
- EP-A- 1 065 241
- US-A1- 2002 082 328

## Description

The present invention relates to a polypropylene resin having a low shrinkage with excellent impact strength and high stiffness and scratch resistance, to the use of this resin, and to an article comprising this resin.

GB-A 1,156,813 discloses a propylene polymer blend containing 65 to 96 wt% of a propylene polymer with less than 10 wt% comonomer, 2 to 20 wt% EPR or EPDM with 20 to 80 wt% ethylene having an intrinsic viscosity between 1 and 3.5 dl/g and 5wt% of an ethylene polymer with less than 5 wt% comonomer having a density of more than 910 kg/m³ and a melt flow rate between 0.1 and 20 g/10min.

WO 02/44272 discloses polyolefin compositions containing 85 to 98 wt% of a propylene/α-olefin copolymer with up to 15 mol% α-olefins as matrix and a propylene/α-olefin rubber copolymer comprising 20 to 80 mol% of α-olefin and 2 to 15 wt% of an ethylene polymer having a density lower than 925 kg/m³ and being a homopolymer or an ethylene copolymer with an α-olefin having 4 to 10 carbon atoms.

US-A 4113806 discloses polypropylene impact blends having improved optical properties containing 70 to 90 wt% of a propylene polymer with a melt flow rate between 0.5 to 30 g/10 min, 2 to 24 wt% of EPR or EPDM with more than 50 wt% ethylene, and 1 to 18 wt% LDPE with a density of less than 929 kg/m³ and a melt flow rate of 0.5 to 30 g/10min.

EP 0 714 923 A1 discloses a propylene block copolymer containing 30 to 94.9 wt% of a propylene polymer being a homopolymer or a copolymer with a co-monomer content of up to 20 wt%, 5 to 50 wt% of a propylene/α-olefin copolymer having an α-olefin content of 20 to 80 wt%, and 0.1 to 20 wt% of an ethylene polymer with a density of more 920 kg/m³.

One disadvantage of polypropylene resins is that in most moulding processes they are subject to significant post-moulding shrinkage. This means that in applications where dimensional tolerances are important the mould must be tailored to the specific composition and the specific moulding operation to yield a finished part of the precise dimension which is required. This shrinkage problem is particularly troublesome where the manufacturer has moulds tailored to a certain composition and moulding operation and subsequently wishes to substitute a different composition or halter the process to e.g. increase the cooling rate. This problem is enhanced because polypropylene resins show a post-moulding shrinkage difference in the longitudinal and the transversal direction.

Polypropylene resins are well suited for producing flexible structures such as body parts for automotive applications, which include exterior parts as bumpers, air dams and other trim and interior parts as dash boards, airbag covers and the like.

According to WO 96/19533, a thermoplastic olefin elastomer with reduced shrinkage for automotive body parts consists of at least 50 wt% of polypropylene, at least 20 wt% EPR and at least 4 wt% of a copolymer of ethylene and at least one α-olefin with 4 to 20 carbon atoms, having a melt flow rate between 0.5 to 50 g/10 min and a density between 860 and 920 kg/m³.

EP 0 784 074 A1 discloses a polypropylene resin composition for interior material for automobiles containing a polypropylene polymer with a melt flow rate of 1 to 100 g/10min. and 0.5 to 50 wt% EPR with an intrinsic viscosity of more than 2 dl/g.

US-A-5147933 describes a polypropylene resin composition for automotive internal and external trim parts consisting of 50 to 90 wt% polypropylene polymer with 2 to 8 wt% ethylene comonomer having a melt flow rate of 10 to 40 g/10min, 5 to 25 wt% EPR containing 10 to 60 wt% propylene co-monomer, and 5 to 30 wt% HDPE with a density of more than 942 kg/m³ and a melt flow rate of 1 to 20 g/10min. Another polypropylene resin suitable for use in automobile parts is disclosed in EP 0 699 711 A1, and consists of 25 to 40 wt% propylene polymer, 25 to 45 wt% EPR, 5 to 15 wt% ethylene-α-olefin copolymer and 5 to 30 wt% talc.

Particularly automotive body parts have to have high impact strength, also at subzero temperatures, a high stiffness and a good scratch resistance. However, the known resins do not show a satisfactory overall combination of these properties combined with low shrinkage.

Therefore, it is the object of the present invention to provide a polypropylene resin for making articles having a low shrinkage, in particular a shrinkage almost independent of the direction of the part, combined with an excellent impact strength, also at subzero temperatures, high stiffness and good scratch resistance.

This object is attained with a polypropylene resin comprising a propylene copolymer containing an ethylene-propylene copolymer with a very low intrinsic viscosity blended with a polyethylene having a density between 905 and 930 kg/m³.

Hence, the polypropylene resin of the present invention comprises
A) less than 70 wt% of a propylene polymer A having a melt flow rate (MFR₂) between 0.01 and 100 g/10min,
B) more than 20 wt% of an ethylene-propylene copolymer (polymer B), containing at least 40 wt% propylene and having an intrinsic viscosity between 1 and 3.5 dl/g, and
C) less than 20 wt% of an ethylene polymer C with a density between 905 and 930 kg/m³ and a melt flow rate (MFR₂) between 0.01 and 10 g/10min.

Surprisingly, it has been found that an article made of such a polypropylene resin possesses a low shrinkage in the longitudinal direction as well as in the transversal direction and has in addition an excellent impact strength, also at subzero temperatures, a balanced stiffness and a high scratch resistance.

The melt flow rate (MFR₂) and the intrinsic viscosity (IV) are measured as stated below in "Description of measurement methods".

Preferably, the polypropylene resin contains at least 40 wt%, more preferably at least 50 wt%, and even more preferred at least 55 wt% propylene polymer A. In case the propylene polymer A content is more than 70 wt%, the shrinkage and the impact strength are not satisfactory. In case the content of the propylene polymer A is below 40 wt%, the stiffness is too low.

The propylene polymer A of the polypropylene resin is an isotactic polymer, preferably made with a Ziegler-Natta catalyst. Metallocene catalysts are also suitable.

It is preferably either a homopolymer or a copolymer of propylene and ethylene with not more than 0.5 wt% ethylene.

The melt flow rate (MFR₂) of the propylene polymer A is preferably 5 to 50 g/10min, more preferably 10 to 30 g/10min.

Preferably, the polypropylene resin contains from more than 20 up to 35 wt% ethylene-propylene copolymer (polymer B).

Preferably, the polypropylene resin contains between 3 and 15 wt% polymer C.

When the ethylene propylene copolymer B content is 20 wt% or less, the impact strength of the polypropylene resin is too low.

The ethylene-propylene copolymer B contains at least 40 wt% propylene. When the propylene content of the ethylene propylene copolymer B is less than 40 wt% the shrinkage of the polypropylene resin is unsatisfactory.

Preferably, the ethylene propylene copolymer B contains between 40 and 50 wt% propylene.

The intrinsic viscosity of the ethylene-propylene copolymer B is 1 to 3.5 dl/g, more preferably from 1.1 to 3.3 dl/g. Below an intrinsic viscosity of 1.0 dl/g the impact strength of the polypropylene resin is too low, particularly at subzero temperatures. When the intrinsic viscosity is more than 3.5 dl/g, the shrinkage is too high.

The ethylene polymer C is a low density polyethylene (LDPE) or a linear low density polyethylene (LLDPE), and preferably either a homopolymer or an ethylene copolymer with at least one α-olefin with 4 to 10 carbon atoms, the α-olefin content being less than 20, preferably less than 15 wt% of the co-polymer. The α-olefin is preferably butene and/or hexene.

The ethylene polymer C has a density between 905 and 930 kg/m³, preferably the density is more than 910 kg/m³, and preferably not more than 925 kg/m³.

The melt flow rate (MFR₂) of the ethylene polymer C preferably is between 0.05 and 5 g/10min, more preferably between 0.1 and 3 g/10min, and still more preferably between 0.2 and 1.5 g/10min.

A part made of the polypropylene resin of the present invention has a low shrinkage and particularly a low ratio between the shrinkage in the transversal direction and in the longitudinal direction. Preferably, the shrinkage in any of the directions is less than 1%, and particularly less than 0.5%. Furthermore, the ratio between the shrinkage in the transversal direction and in the longitudinal direction preferably is less than 3, more preferably less than 2.

The shrinkage is measured as stated below in "Description of measurement methods".

In addition, parts made of the polypropylene resin of the invention have a high scratch resistance ΔL, particularly less than 3.5, ΔL being the difference in brightness between an untreated surface of the resin and a surface of the resin in which a cross hatch is cut with a distance between each grid line of 2 mm with a steel ball tip having a diameter of 1 mm, a cutting force of 10 N and a cutting speed of 1000 mm/min.

In addition, the polypropylene resin of the present invention has a high flexural modulus of more than 750 MPa determined by ISO 178.

The impact strength of the resin of the present invention is at least 6 kJ/m², in particular at least 15 kJ/m² at +23 °C and at least 3 kJ/m², preferably at least 3.7 kJ/m² at a subzero temperature of -20 °C.

The polypropylene resin of the invention may further comprise conventional additives, such as antioxidants, stabilizers, acid scavengers, clarifying agents, colouring agents, anti-UV agents, nucleating agents, antistatic agents, mould release agents, fillers, like nano fillers, etc. Typically, these additives may be present at less than 2 wt% each, more preferably less than 0.07 wt% relative to the total weight of the resin.

The polypropylene resin of the invention is particularly useful in producing moulded and/or extruded articles by employing of conventional injection moulding, blow moulding and/or extrusion techniques.

Preferably, these articles are body parts for automotive applications, either exterior or interior parts. The exterior parts may be bumper covers, exterior fascia, air dams, and other trim, the interior parts dash boards, air bag covers and the like.

### Production of propylene polymer A

The propylene polymer A may be produced by single- or multistage process polymerisation of propylene or propylene and α-olefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactor. Those processes are well known to one skilled in the art.

A suitable catalyst for the polymerisation of the propylene polymer A is any stereospecific catalyst for propylene polymerisation which is capable of polymerising and copolymerising propylene and comonomers at a temperature of 40 to 110 °C and at a pressure from 10 to 100 bar. Ziegler-Natta catalysts as well as metallocene catalysts are suitable catalysts.

One skilled in the art is aware of the various possibilities to produce propylene homo- and copolymers and will simply find out a suitable procedure to produce suitable polymers which are used in the present invention.

### Production of ethylene-propylene copolymer (polymer B)

An ethylene propylene elastomeric copolymer may be produced by known polymerisation processes such as solution, suspension and gas-phase polymerisation using conventional catalysts. Ziegler-Natta catalysts as well as metallocene catalysts are suitable catalysts.

A widely used process is the solution polymerisation. Ethylene, propylene and catalyst systems are polymerised in an excess of hydrocarbon solvent. Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. Flashing off the propylene and comonomer completes the polymerisation process.

The gas-phase polymerisation technology consists of one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

The production of ethylene propylene elastomeric copolymers is also described in detail in e.g. US 3,300,459, US 5,919,877, EP 0 060 090 A1 and in a company publication by EniChem "DUTRAL, Ethylene-Propylene Elastomers", pages 1-4 (1991).

Alternatively, elastomeric ethylene-propylene copolymers, which are commercially available and which fulfil the indicated requirements, can be used.

Alternatively, polymers A and B may be produced in a series of reactors, i.e. starting with the production of polymer A in a loop reactor and transferring the product into a gas phase reactor, where copolymer B is polymerised.

### Production of ethylene polymer C

It is preferred to use ethylene polymers which are commercially available. Alternatively, suitable ethylene polymers may be produced according to the following description.

Low density polyethylene may be produced by free-radical-initiated polymerisation using free radical initiators such as peroxide or oxygen in high pressure processes. The polymerisation is carried out in tubular or stirred autoclave reactors at a temperature of about 130 to 330 °C and at a pressure around 700 to 3000 bars.

Linear low density polyethylene is made by the copolymerisation of ethylene and α-olefins. It may be produced in low pressure processes such as gas-phase process, a solution-phase polymerisation process, a slurry process, or combinations thereof like staged gas phase, staged slurry/gas phase or staged solution phase. A suitable catalyst for the polymerisation of LLDPE is any stereospecific catalyst which is capable of polymerising and copolymerising ethylene and comonomers. Ziegler-Natta as well as metallocene catalysts are suitable catalysts. In the gas-phase process, reactor temperatures are usually below 100 °C with pressures of about 20 bars. In the solution process, reactor temperatures are usually 170 - 250 °C with pressures of 40 - 140 bars. In the solution-phase polymerisation process, reactor temperatures are usually 70 - 110 °C with pressures of 30 - 50 bars.

### Description of measurement methods

### a) Melt flow rate (MFR₂)

The melt flow rates MFR₂ were measured under a load of 2.16 kg at 230 °C (for PP or PP-copolymers) and 190 °C (for PE), according to ISO 1133.

### b) C₃-content

The propylene content was calculated by measuring the ethylene content by IR of whole polymer or polymer B (C3=1-C2).

### c) Intrinsic viscosity

The intrinsic viscosity was measured according to ISO 1628-1 (of October 1999) in decalin at 135 °C.

### d) Shrinkage

The shrinkage is determined by injection moulding of the resin with an extruder into a mould having a mould cavity to form a plate of 150 x 80 x 2mm. After cooling at room temperature for 96 hours, the length and the width of the blade are determined to calculate the longitudinal and the transversal shrinkage in percent.

### e) Scratch resistance

To determine the scratch resistance a Cross Hatch Cutter Model 420p, manufactured by Erichsen, was used.

A cross hatch (40 x 40 mm, distance between each grid line 2mm) was cut onto the specimen surface with fine grain (N111). The instrument is equipped with a steel ball tip (1.0 mm). The cutting force is 10 N. A cutting speed of 1000 mm/min is used.

Scratch evaluation was carried out by measuring the ΔL value by means of a spectral photometer. This measurement corresponds to the difference in brightness of the treated versus the untreated polymer surface.

### f) Flexural modulus

Flexural modulus was determined according to ISO 178.

### g) Notched Charpy impact strength

The notched Charpy impact strength measurement was carried out according to ISO 179/1 eA at 23 °C and -20 °C by using compression moulded test specimen as described in EN ISO 1873-2.

### Examples:

### Preparation of propylene polymer P (including Polymers A and B)

The propylene polymers P1 - P7 (table 1) used for the present invention were prepared to the following procedure.

### a) Raw Materials:

Hexane dried over molecular sieve (3/10A)
TEAL: 93 % from Sigma-Aldrich
Donor: Dicyclopentyldimethoxysilane: ex Wacker Chemie (99%)
Propylene: polymerisation grade
Hydrogen: supplier AGA, quality 6.0
The catalyst ZN104 is commercially available from Basell.

### b) Polymerisation

The polymer P2 was produced in a pilot plant having a loop reactor and a fluid bed gas phase reactor connected in series. The catalyst, cocatalyst and donor were fed to the loop reactor. The reactor medium was flashed away before the solid polymer containing the active catalyst entered the gas phase reactor.

The prepolymerised supported Ti catalyst (ZN104 from Basell) was used in the polymerisation. Cocatalyst was triethyl aluminium (TEAL) and external donor was dicyclopentyldimethoxysilane (DCPDMS). TEAL/donor ratio (g/g) was 3 and TEAL/C3 ratio was 0.23 g/kg.

In the first stage (loop reactor) the PP homopolymer matrix (polymer A) was produced and the polymerisation was continued in the second stage (gas phase reactor) which produced the rubbery copolymer (polymer B). The polymerization temperature was 70 °C in the loop reactor and 80 °C in the gas phase reactor. The MFR of the first stage and the final product were adjusted with separate hydrogen feeds. The rubbery copolymer was produced with a low comonomer ratio, C2/(C2+C3) = 0.46 (mol/mol). The homopolymer matrix (polymer A) had a MFR of 25 g/10 min and the final copolymer (polymer P2) had a MFR of 20g/10min (after stabilisation and pelletising). Standard formulation with 1500 ppm Irganox B215 (from Ciba) and 500 ppm Ca-stearate was used.

The final copolymer P2 had an ethylene content of 19.2 mol% (by FTIR) and a xylene soluble fraction (polymer B) at RT of 25 wt%. The ethylene content of the xylene soluble fraction (polymer B) was 57 wt% and the intrinsic viscosity (IV) of the fraction measured in decalin at 135°C according to standard procedures was 1.4 dl/g.

The results of this polymer P2 are found in table 1.

Polymers P1, P3 - P7 were produced as polymer P2 except that there was used a lower (higher) hydrogen feed to the gas phase reactor resulting in a higher (lower) IV of the xylene soluble fraction (polymer B) and a different monomer feed (ethylene and propylene) resulting in different amounts and compositions of polymer B (Table 1).

**Table 1 (polymer P)**

| | Polymer B [%] | C3 (Polymer B) [wt%] | IV (Polymer B) [dl/g] | MFR₂ [g/10 min] |
|---|---|---|---|---|
| P1 | 28 | 46 | 1.3 | 8 |
| P2 | 25 | 43 | 1.4 | 21 |
| P3 | 31 | 70 | 3.2 | 7 |
| P4 | 26 | 45 | 3.2 | 7 |
| P5 | 24 | 37 | 3.2 | 7 |
| P6 | 18 | 52 | 1.2 | 10 |
| P7 | 25 | 50 | 4.1 | 5 |

### Ethylene Polymer C

As ethylene polymers C1, C2, C4 to C6 commercially available polymer grades were used. C 1 is a grade of Dow Chemical, C2, C4 to C6 are grades of Borealis. The properties of these grades are summarized in table 2.

### Preparation of C3

### a) Catalyst

134 grams of a metallocene complex (bis(n-butyldicyclopentadienyl) hafnium dichloride supplied by Witco as TA02823, containing 0.36% by weight Hf) and 9.67 kg of a 30% solution of methylaluminoxane (MAO) in toluene (supplied by Albemarle) were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30 °C. The mixture was allowed to react for 3 hours after complex addition at 30 °C.

### b) Polymerization

A continuously operating loop reactor having a volume of 500 dm³ was operated at 85 °C temperature and 60 bar pressure. Into the reactor were introduced propane diluent, ethylene, 1-butene comonomer, hydrogen and the polymerisation catalyst described above, in such amounts that the ethylene concentration in the liquid phase of the loop reactor was 5.8% by mole, the ratio of hydrogen to ethylene was 0.48 mol/kmol, the ratio of 1-butene to ethylene was 118 mol/kmol and the polymer production rate in the reactor was 30 kg/h. The thus formed polymer had a melt index MFR₂ of 79 g/10 min and a density of 938 kg/m³.

The slurry was intermittently withdrawn from the reactor by using a settling leg and directed to a flash tank operated at a temperature of about 50 °C and a pressure of about 3 bar.

From the flash tank, the polymer powder, containing a small amount of residual hydrocarbons, was transferred into a gas phase reactor operated at 75 °C temperature and 20 bar pressure. Into the gas phase reactor were also introduced additional ethylene, 1-hexene comonomer and nitrogen as inert gas in such amounts that the ethylene concentration in the circulating gas was 37% by mole, the ratio of 1-hexene to ethylene was 10 mol/kmol and the polymer production was 37 kg/h. The concentrations of 1-butene and hydrogen were so low that they could not be detected by the on-line gas chromatograph which was used to monitor the gas composition.

The polymer collected from the gas phase reactor was stabilized by adding 0.15% wt of stabilizer, Triganox B561 (available from AKZO), to the powder. The stabilized polymer was then extruded and pelletised with a CIM90P extruder , manufactured by Japan Steel Works.

The production split between the loop and gas phase reactor was thus 45/55. The polymer pellets had a melt index MFR₂ of 0.78 g/10 min, a density of 919 kg/m³, a 1-butene content of 1.4% wt, a content of 1-hexene of 7.1 % wt (measured by IR).

**Table 2:**

| | Grade | MFI (190°/2, 16kg) | Comonomer type | Comonomer content [wt%] | Density [kg/m³] |
|---|---|---|---|---|---|
| C1 | EG8100 | 1 | octene | 38 | 870 |
| C2 | BL2631 | 0.5 | -- | -- | 923 |
| C3 | | 0.78 | butene | 1.4 | 919 |
| | | | hexene | 7.1 | |
| C4 | FB4230 | 0.4 | butene | 7.5 | 923 |
| C5 | FB2310 | 0.2 | butene | 5.7 | 923 |
| C6 | CA9150 | 15 | -- | -- | 915 |

### Preparation of polypropylene resins

The propylene polymers P1 to P7 and the ethylene polymers C1 to C6 were melt mixed in an extruder in amounts shown in Table 3.

**Table 3:**

| | Polymer P | Polymer C | |
|---|---|---|---|
| | | Nature | Content |
| E1 | P1 | C3 | 5 |
| E2 | P1 | C3 | 10 |
| E3 | P1 | C3 | 15 |
| E4 | P1 | C4 | 10 |
| CE1 | P1 | -- | -- |
| CE2 | P1 | C5 | 10 |
| CE3 | P1 | C6 | 10 |
| CE4 | P1 | C2 | 10 |
| E5 | P2 | C3 | 10 |
| CE5 | P2 | -- | -- |
| E6 | P3 | C3 | 10 |
| CE6 | P3 | -- | -- |
| E7 | P4 | C3 | 10 |
| CE7 | P4 | -- | -- |
| CE8 | P5 | -- | -- |
| CE9 | P5 | C3 | 10 |
| CE10 | P6 | -- | -- |
| CE11 | P6 | C3 | 10 |
| CE12 | P1 | C1 | 10 |
| CE13 | P7 | C3 | 10 |

### E1 to E7 are examples according to the invention. CE1 to CE13 are comparative examples.

### Performance of the polypropylene resins

The notched Charpy impact strength (NIS), flexural modulus, shrinkage in the longitudinal and transversal direction, the ratio of the transversal to the longitudinal shrinkage (t/l) and the scratch resistance ΔL of the polypropylene resins according to the invention and according to the comparative examples shown in table 4 were measured and determined as outlined above in "Description of measurement methods".

**Table 4:**

| | NIS [kJ/m²] | | Flex. Modulus | Shrinkage [%] | | | Scratch |
|---|---|---|---|---|---|---|---|
| | 23°C | -20°C | [MPa] | longitudinal | transversal | t/l | ΔL |
| CE1 | 13.7 | 2.2 | 866 | 0.18 | 0.45 | 2.5 | 8.13 |
| E1 | 17.5 | 3.7 | 828 | 0.16 | 0.41 | 2.6 | 6.42 |
| E2 | 22 | 4.7 | 790 | 0.14 | 0.38 | 2.7 | 5.8 |
| E3 | 25.3 | 5.2 | 756 | 0.14 | 0.37 | 2.6 | 3.72 |
| E4 | 17.5 | 4.4 | 816 | 0.16 | 0.43 | 2.7 | 4.12 |
| CE2 | 18.2 | 4.4 | 767 | 0.22 | 0.52 | 2.4 | 1.49 |
| CE3 | 19.9 | 4.3 | 724 | 0.13 | 0.36 | 2.8 | 13.34 |
| CE4 | 22.2 | 4.6 | 903 | 0.24 | 0.53 | 2.2 | 3.03 |
| CE5 | 5.6 | 2.5 | 934 | 0.38 | 0.7 | 1.8 | 7.34 |
| E5 | 7.2 | 3.5 | 916 | 0.29 | 0.55 | 1.9 | 3.08 |
| CE6 | 73 | 8.8 | 722 | 0.99 | 1.15 | 1.2 | 1.3 |
| E6 | 77 | 11.4 | 659 | 0.89 | 0.98 | 1.1 | 0.63 |
| CE7 | 36.8 | 8.5 | 865 | 1.09 | 1.18 | 1.1 | 1.22 |
| E7 | 35.9 | 9 | 781 | 0.9 | 1 | 1.1 | 0.64 |
| CE8 | 7.6 | 4.3 | 936 | 1.15 | 1.23 | 1.1 | 1.03 |
| CE9 | 10.3 | 5.9 | 862 | 0.90 | 1.01 | 1.1 | 0.34 |
| CE10 | 5.8 | 1.5 | 1037 | 0.81 | 1.16 | 1.4 | 1.66 |
| CE11 | 4.8 | 1.9 | 1013 | 0.78 | 1 | 1.3 | 1.16 |
| CE12 | 25.9 | 5 | 755 | 0.08 | 0.32 | 4.0 | 1.79 |
| CE13 | 43.5 | 9.2 | 787 | 1.22 | 1.31 | 1.1 | 2.7 |

Comparative example CE11 shows that a high propylene polymer content of 72 wt% and a low ethylene-propylene copolymer B content of 18 wt% leads to a low impact strength of 4.8 and 1.9 kJ/m², respectively, at 23 °C and -20 °C.

Comparative example CE9 shows that a low propylene content of 37 wt% in the ethylene propylene copolymer leads to a high transversal shrinkage of 1.01%.

Comparative examples CE1, CE5, CE6, CE7, CE8 and CE10 show that in the absence of an ethylene polymer, the impact strength, particularly at a low temperature of -20 °C, is very low (CE1 and CE5) or the transversal shrinkage is very high (CE7, CE6, CE8 and CE10).

Comparative example CE12 shows that an ethylene polymer C with a low density of 870 kg/m³ leads to a high t/l ratio of 4.0.

Comparative example CE3 shows that a high melt flow rate (MFR₂) of polymer C6 (15 g/10 min) leads to a very low scratch resistance ΔL of 13.34.

As shown in table 4, the relatively high t/l ratio of examples E1 to E4 is compensated by a low overall shrinkage, whereas polypropylene resin E7 with a transversal shrinkage of 1% has a balanced t/l ratio of 1.1.

## Claims

1. A polypropylene resin comprising
A) less than 70 wt% of a propylene polymer A having a melt flow rate (MFR₂) between 0.01 and 100 g/10 min,
B) more than 20 wt% of an ethylene-propylene copolymer B, containing at least 40 wt% propylene and having an intrinsic viscosity between 1 and 3.5 dl/g, and
C) less than 20 wt% of an ethylene polymer C with a density between 905 and 930 kg/m³ and a melt flow rate (MFR₂) between 0.01 and 10 g/10 min.

2. A polypropylene resin according to claim 1 or 2, containing at least 40 wt% propylene polymer A.

3. A polypropylene resin according to claim 1, wherein the propylene polymer A is a propylene homopolymer or a copolymer of propylene and ethylene with not ore than 0.5 wt% ethylene.

4. A polypropylene resin according to anyone of the preceding claims, wherein the melt flow rate (MFR₂) of the propylene polymer A is 5 to 50 g/10 min.

5. A polypropylene resin according to anyone of the preceding claims, containing not more than 35 wt% ethylene-propylene copolymer B.

6. A polypropylene resin according to anyone of the preceding claims, wherein the ethylene-propylene copolymer B contains not more than 50 wt% propylene.

7. A polypropylene resin according to anyone of the preceding claims, containing at least 2 wt% ethylene polymer C.

8. A polypropylene resin according to anyone of the preceding claims, wherein the ethylene polymer C is a homopolymer or an ethylene copolymer with at least one alpha-olefin with 4 to 10 carbon atoms, the alpha-olefin content being less than 20 wt% of the ethylene copolymer.

9. A polypropylene resin according to anyone of the preceding claims, wherein the density of ethylene polymer C is more than 910 kg/m³.

10. A polypropylene resin according to anyone of the preceding claims, wherein the melt flow rate (MFR₂) of the ethylene polymer C is less than 3 g/10 min.

11. A polypropylene resin according to anyone of the preceding claims, having a shrinkage of less than 1%.

12. A polypropylene resin according to claim 11, wherein the ratio of the shrinkage in the transversal direction to the shrinkage in the longitudinal direction is less than 3.

13. A polypropylene resin according to claims 11 and 12, wherein the shrinkage is less than 0.5% in the transverse and in the longitudinal direction when the ratio of the shrinkage in the transverse direction to the shrinkage in the longitudinal direction is more than 2.

14. A polypropylene resin according to anyone of the preceding claims, having a scratch resistance ΔL of less than 7, ΔL being the difference in brightness between an untreated surface of the resin and a surface of the resin in which a cross-hatch is cut with a distance between each grid line of 2 mm with a steel ball tip having a diameter of 1 mm, a cutting force of 10 N and a cutting speed of 1000 mm/min.

15. A polypropylene resin according to anyone of the preceding claims, having a flexural modulus of more than 750 MPa.

16. A polypropylene resin according to anyone of the preceding claims, having a notched Charpy impact strength of at least 6 kJ/m² at 23°C and at least 3 kJ/m² at 20°C.

17. A polypropylene resin according to anyone of the preceding claims, further comprising one or more conventional additives and/or stabilizers and/or fillers.

18. Use of the polypropylene resin according to anyone of the preceding claims for producing a molded and/or extruded article.

19. Use according to claim 18, wherein the article is an exterior or interior automotive part.

20. Article comprising the polypropylene resin according to any of claims 1 to 17.

## Patentansprüche

1. Polypropylenharz, umfassend:
(A) weniger als 70 Gew.-% eines Propylenpolymers A mit einer Schmelzfließrate (MFR₂) von 0,01 bis 100 g/10 min,
(B) mehr als 20 Gew.-% eines Ethylen-Propylen-Copolymers B, das mindestens 40 Gew.-% Propylen enthält und eine Strukturviskosität von 1 bis 3,5 dl/g aufweist, und
(C) weniger als 20 Gew.-% eines Ethylenpolymers C mit einer Dichte von 905 bis 930 kg/m³ und einer Schmelzfließrate (MFR₂) von 0,01 bis 10 g/10 min.

2. Polypropylenharz nach Anspruch 1 oder 2, das mindestens 40 Gew.-% Propylenpolymer A enthält.

3. Polypropylenharz nach Anspruch 1, wobei das Propylenpolymer A ein Propylenhomopolymer oder ein Copolymer von Propylen und Ethylen mit nicht mehr als 0,5 Gew.-% Ethylen ist.

4. Polypropylenharz nach einem der vorstehenden Ansprüche, wobei die Schmelzfließrate (MFR₂) des Propylenpolymers A 5 bis 50 g/10 min beträgt.

5. Polypropylenharz nach einem der vorstehenden Ansprüche, das nicht mehr als 35 Gew.-% Ethylen-Propylen-Copolymer B enthält.

6. Polypropylenharz nach einem der vorstehenden Ansprüche, wobei das Ethylen-Propylen-Copolymer B nicht mehr als 50 Gew.-% Propylen enthält.

7. Polypropylenharz nach einem der vorstehenden Ansprüche, das mindestens 2 Gew.-% Ethylenpolymer C enthält.

8. Polypropylenharz nach einem der vorstehenden Ansprüche, wobei das Ethylenpolymer C ein Homopolymer oder ein Copolymer von Ethylen mit mindestens einem α-Olefin mit 4 bis 10 Kohlenstoffatomen ist, wobei der Gehalt an α-Olefin weniger als 20 Gew.-% des Ethylencopolymers beträgt.

9. Polypropylenharz nach einem der vorstehenden Ansprüche, wobei die Dichte des Ethylenpolymers C mehr als 910 kg/m³ beträgt.

10. Polypropylenharz nach einem der vorstehenden Ansprüche, wobei die Schmelzfließrate (MFR₂) des Ethylenpolymers C weniger als 3 g/10 min beträgt.

11. Polypropylenharz nach einem der vorstehenden Ansprüche, das eine Schrumpfung von weniger als 1 % aufweist.

12. Polypropylenharz nach Anspruch 11, wobei das Verhältnis zwischen der Schrumpfung in Querrichtung und der Schrumpfung in Längsrichtung weniger als 3 beträgt.

13. Polypropylenharz nach den Ansprüchen 11 und 12, wobei die Schrumpfung in der Quer- und der Längsrichtung weniger als 0,5 % beträgt, wenn das Verhältnis zwischen der Schrumpfung in Querrichtung und der Schrumpfung in Längsrichtung mehr als 2 beträgt.

14. Polypropylenharz nach einem der vorstehenden Ansprüche, das eine Kratzfestigkeit ΔL von weniger als 7 aufweist, wobei ΔL die Differenz zwischen der Helligkeit einer unbehandelten Oberfläche des Harzes und der einer Oberfläche des Harzes ist, bei der mit einer Stahlkugelspitze mit einem Durchmesser von 1mm, einer Schnittkraft von 10 N und einer Schittgeschwindigkeit von 1000 mm/min eine Schraffierung mit einem Abstand zwischen jeder Gitterlinie von 2 mm geschnitten worden ist.

15. Polypropylenharz nach einem der vorstehenden Ansprüche, das einen Biegemodul von mehr als 750 MPa aufweist.

16. Polypropylenharz nach einem der vorstehenden Ansprüche, das eine Kerbschlagzähigkeit nach Charpy von mindestens 6 kJ/m² bei 23°C und von mindestens 3 kJ/m² bei -20°C aufweist.

17. Polypropylenharz nach einem der vorstehenden Ansprüche, das ferner einen oder mehrere herkömmliche Zusätze und/oder Stabilisatoren und/oder Füllstoffe umfaßt.

18. Verwendung des Polypropylenharzes nach einem der vorstehenden Ansprüche für die Herstellung eines Formgegenstandes und/oder extrudierten Gegenstandes.

19. Verwendung nach Anspruch 18, wobei der Gegenstand ein Außen- oder Innenteil eines Kraftfahrzeugs ist.

20. Gegenstand, der das Polypropylenharzes nach einem der Ansprüche 1 bis 17 umfaßt.

## Revendications

1. Résine de polypropylène comprenant :
A) moins de 70% en poids d'un polymère de propylène A ayant un indice de fluidité (MFR₂) compris entre 0,01 et 100 g/10 min,
B) plus de 20% en poids d'un copolymère éthylène-propylène B, contenant au moins 40% en poids de propylène et ayant une viscosité intrinsèque comprise entre 1 et 3,5 dl/g, et
C) moins de 20% en poids d'un polymère d'éthylène C ayant une masse volumique comprise entre 905 et 930 kg/m³ et un indice de fluidité (MFR₂) compris entre 0,01 et 10 g/10 min.

2. Résine de polypropylène selon la revendication 1 ou 2, contenant au moins 40% en poids de polymère de propylène A.

3. Résine de polypropylène selon la revendication 1, dans laquelle le polymère de propylène A est un homopolymère de propylène ou un copolymère de propylène et d'éthylène ne comportant pas plus de 0,5% en poids d'éthylène.

4. Résine de polypropylène selon l'une quelconque des revendications précédentes, dans laquelle l'indice de fluidité (MFR₂) du polymère de propylène A est compris entre 5 et 50 g/10 min.

5. Résine de polypropylène selon l'une quelconque des revendications précédentes ne contenant pas plus de 35% en poids de copolymère éthylène-propylène B.

6. Résine de polypropylène selon l'une quelconque des revendications précédentes, dans laquelle le copolymère éthylène-propylène B ne contient pas plus de 50% en poids de propylène.

7. Résine de polypropylène selon l'une quelconque des revendications précédentes, contenant au moins 2% en poids de polymère d'éthylène C.

8. Résine de polypropylène selon l'une quelconque des revendications précédentes, dans laquelle le polymère d'éthylène C est un homopolymère ou un copolymère d'éthylène avec au moins une alpha-oléfine comportant 4 à 10 atomes de carbone, la teneur en alpha-oléfine(s) étant inférieure à 20% en poids du copolymère d'éthylène.

9. Résine de polypropylène selon l'une quelconque des revendications précédentes, dans laquelle la masse volumique du polymère d'éthylène C n'est pas supérieure à 910 kg/m³.

10. Résine de polypropylène selon l'une quelconque des revendications précédentes, dans laquelle l'indice de fluidité (MFR₂) du polymère d'éthylène C est inférieur à 3 g/10 min.

11. Résine de polypropylène selon l'une quelconque des revendications précédentes, ayant un retrait inférieur à 1%.

12. Résine de polypropylène selon la revendication 11, dans laquelle le rapport du retrait dans le sens transversal au retrait dans le sens longitudinal est inférieur à 3.

13. Résine de polypropylène selon les revendications 11 et 12, dans laquelle le retrait est inférieur à 0,5% dans le sens transversal et dans le sens longitudinal lorsque le rapport du retrait dans le sens transversal au retrait dans le sens longitudinal est supérieur à 2.

14. Résine de polypropylène selon l'une quelconque des revendications précédentes, ayant une résistance au rayage ΔL inférieur à 7, ΔL étant la différence de brillance entre une surface non traitée de la résine et une surface de la résine dans laquelle un quadrillage a été pratiqué avec une distance entre chaque ligne de grille de 2 mm avec une pointe à bille d'acier d'un diamètre de 1mm, une force de coupe de 10 N et une vitesse de coupe de 1000 mm/min.

15. Résine de polypropylène selon l'une quelconque des revendications précédentes, ayant un module de flexion de plus de 750 MPa.

16. Résine de polypropylène selon l'une quelconque des revendications précédentes, ayant une résistance au choc Charpy sur barreau entaillé d'au moins 6 kJ/m² à 23°C et au moins 3 kJ/m² à -20°C.

17. Résine de polypropylène selon l'une quelconque des revendications précédentes, comprenant en outre un(e) ou plusieurs additif(s) et/ou stabilisant(s) et/ou charge(s) conventionnel(le)s.

18. Utilisation de la résine de polypropylène selon l'une quelconque des revendications précédentes pour la production d'un article moulé et/ou extrudé.

19. Utilisation selon la revendication 18, dans laquelle l'article est une pièce automobile extérieure ou intérieure.

20. Article comprenant la résine de polypropylène selon l'une quelconque des revendications 1 à 17.
